# EUROPEAN PATENT APPLICATION

(11) **EP 4 534 277 A1**
(43) Date of publication of application: **09.04.2025**
(21) Application number: 23306714.9
(22) Date of filing: 05.10.2023
(51) Int. Cl.: B29D 11/00, B41M 3/00

(54) **METHOD FOR MANUFACTURING AN OPTICAL ARTICLE AND ASSOCIATED OPTICAL ARTICLE**

(71) Applicant: Essilor International, 94220 Charenton-Le-Pont (FR)
(72) Inventor: Herfort, David, 31160 Chihuahua (MX)
(74) Representative: Plasseraud IP

(57) **Abstract**

A method for manufacturing an optical article, the method comprising:
- providing (100) two base substrates (10), each base substrate (10) comprising two opposite optical surfaces (12a, 12b) and placing the base substrates (10) in a printing assembly (20),
- providing a pattern to be printed on each base substrate (10) through inkjet printing,
- determining (200) a preferred path for a printing head (22) to print the pattern on each base substrate (10), taking into account each optical surface (12a, 12b) of each base substrate (10), the preferred path minimizing a parameter representative of a distance measured from the printing head (22) to the optical surface (12a, 12b) being imprinted,
- printing (600) the pattern with at least one inkjet printing head (22) depositing at least one dye, the printing head (22) following the preferred path, and
- placing (800) each base substrate (10) in a heating assembly (40) for a predetermined duration.

## Description

### Field of the invention

The invention relates to the field of inkjet printing on a substrate to manufacture an optical article, such as an optical lens.

More specifically, the invention relates to a method for manufacturing an optical article comprising printing a pattern on at least one optical surface of a substrate.

The invention also relates to an optical article manufactured through such a method.

### Background of the invention

The local application of a dye to a surface of a lens, notably an ophthalmic lens, allows the application of various images or patterns on one of more of the optical surfaces of the lens in a precise and controlled manner. For example, a homogeneous coating may be applied on the whole optical surface or a part thereof, to tint the lens and apply a colour to the lens. This is useful both for reducing the transmission of light through the glass, as well as changing the aesthetic aspect of the lens and of the final article comprising the lens and constitutes an interesting alternative to tinting of the lens subtract.

Another application of dyes on a lens is to print more intricate and detailed patterns, such as scriptures and/or logo. This is useful for providing information to the user of the optical article, for example information relative to an optical correction provided by an ophthalmic lens, and also for aesthetic and branding purposes.

One known advantageous method for applying a dye to an object is inkjet printing, which offers a high degree of control on the application of dye and allows following complex printing pathways for the printing head(s), that are sometimes required for specific lenses with several different curvatures on the optical surfaces.

A critical parameter to achieve a satisfying result in inkjet printing is to control and optimize the distance from the printing head to the surface being imprinted. This is both the case for obtaining a homogeneous layer, for example for tinting or colouring a lens, and for fine resolution printing, such as when printing text or logos, for example. Usually, a satisfactory distance from the printing head to the surface is between 1 and 3 millimetres.

In the case of an ophthalmic lens, the optical surface being imprinted is usually not flat but concave or convex. Furthermore, lenses can also be aspherical present several different curvatures, usually along two different axis, and even local discontinuities, in the case of a highly technical lens.

### Summary of the invention

The invention aims at solving the aforementioned technical problems. To this end, the invention relates to a method for manufacturing an optical article, the method comprising:
- providing two base substrates, each base substrate comprising two opposite optical surfaces and placing the base substrates in a printing assembly,
- providing a pattern to be printed on each base substrate through inkjet printing,
- determining a preferred path for a printing head to print the pattern on each base substrate, taking into account each optical surface of each base substrate, the preferred path minimizing a parameter representative of a distance measured from the printing head to the optical surface being imprinted,
- printing the pattern with at least one inkjet printing head depositing at least one dye, the printing head following the preferred path, and
- placing each base substrate in a heating assembly for a predetermined duration.

Such a method allows the use of an increased number of possibilities and parameters when determining the printing path, and thus enables an improved control over the distance from the printing head to the surface.

The parameter representative of the distance is an average of the distance measured from the printing head to the optical surface being imprinted over the preferred path.

This feature allows to optimise the printing distance globally over the entire printing path. The average may be calculated with different weight values for different weighting regions of the optical surfaces, at least one weighting region closer to an optical center of the substrate having a higher weight value than at least one weighting region farther from the optical center. The optical surface may comprise at least one aspherical region and/or at least one discontinuous region, each aspherical region and each discontinuous region having a higher weight value than at least one spherical region of the optical surface.

This feature allows to put a greater emphasis on irregular regions of the optical surface, where variations of the distance between the printing head and the substrate are more likely to occur. The parameter representative of the distance may be a maximum distance measured from the printing head to the optical surface being imprinted over the optical surface.

This feature allows to keep the distance from the printing head to the surface under a maximum threshold value to maintain a minimum precision in the printing.

The preferred path may extend along at least two opposite optical surfaces of each base substrate.

This feature allows to use the most favourable printing path on both face of the substrate, to better accommodate height variations, for example in a complex lens.

During the printing of the pattern, a first part of the pattern may be printed on one of the opposite optical surfaces and a second part of the pattern may be printed on another one of the opposite optical surfaces.

This feature allows to split the pattern in at least two parts to be printed on separate surfaces, to select, for each part of the pattern to be printed, the most favourable surface of the substrate with regard to distance from the printing head to said surface.

The first part of the pattern and the second part of the pattern may form a uniform layer when observed from a direction of an optical axis of the base substrate.

This feature allows to obtain a similar effect to a uniform layer with regard to external aspect of the lens and to light transmission through the lens, while splitting the printed pattern on different surfaces, for lenses with complex surface geometries.

The first part of the pattern may comprise at least one first gradient area extending along a border of the first part and the second part of the pattern comprises at least one second gradient area extending along a border of the second part, each first gradient area being superposed with one of the second gradient areas when observed from the direction of the optical axis, a sum of an optical transmission through the first part of the pattern and through the second part of pattern being constant.

This feature allows the transitions between the different parts of the pattern printed on separate surfaces to present a smoother visual aspect and a constant light transition through the lens. At least one of the opposite optical surfaces may comprise at least one curved region.

The method may further comprise:
- depositing a primer layer by depositing a primer on at least part of at least one of the optical surfaces of each base substrate,
- printing the pattern over the primer layer,
- migrating the dye through the primer layer to the optical surface in the heating assembly, and
- removing the primer layer.

These steps allow a better adherence of the dye to the surface and a reduced movement of the dye between printing and drying.

The pattern may comprise a uniform layer extending over at least part of one of the opposite optical surfaces.

This feature allows the application of a light absorbing layer directly on the substrate, as well as aesthetic modifications.

The method further may comprise a surface treatment step during which the optical surface is treated with a plasma.

This feature allows to alter the surface state of the substrate through the plasma treatment to improve the adherence and stability of the dye.

The invention also relates to an optical article manufactured with a method as described above.

### Brief description of the drawings

Figures 1 and 2 are schematic side views of an inkjet printing step on two different surfaces of a substrate,
Figure 3 is a schematic view of the substrate of figures 1 and 2 showing two separate printing regions,
Figure 4 is a schematic view of steps of a manufacturing method according to the invention,
Figure 5 are schematic views of optical articles obtained through the manufacturing method according to the invention.

### Detailed description of embodiments

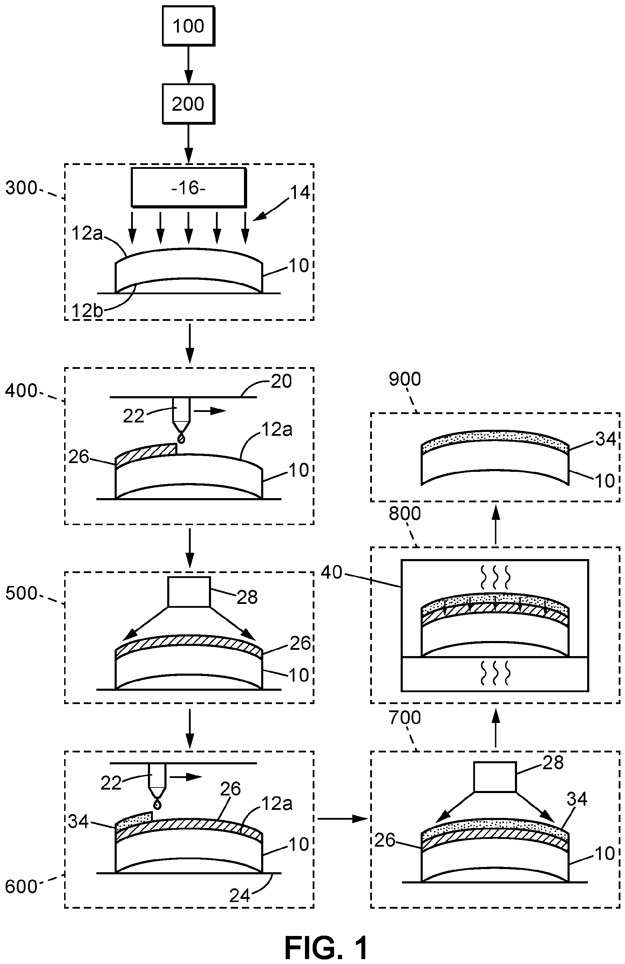

A method for manufacturing an optical article is described below, in reference to figure 1. The method comprises printing a pattern on a base substrate using a dye. The pattern may comprise a homogeneous layer extending over at least one surface of the substrate and/or a detailed image, for example comprising lines and text characters.

The method comprises a step 100 of providing two base substrates 10 to be printed on. Each base substrate 10 is for example a lens substrate, such as an unfinished lens, and has a first optical surface 12a and a second optical surface 12b, opposite the first optical surface 12a. The base substrates 10 may be identical or different from each other, depending on the ophthalmic role played by each base substrate 10.

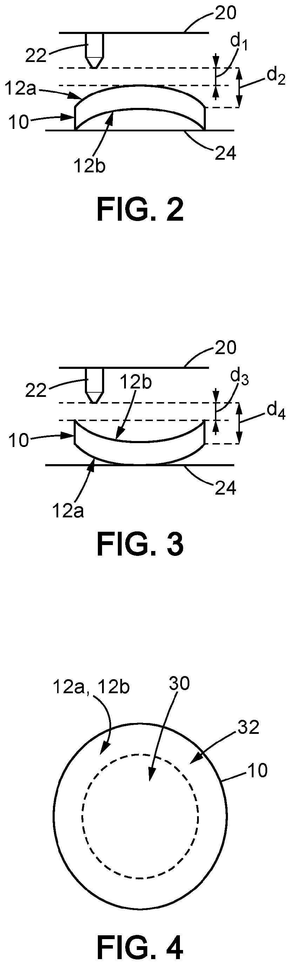

An example of one of the base substrates 10 is shown on figures 2 and 3, which describe different printing paths for printing a pattern respectively on the first optical surface 12a and the second optical surface 12b.

In the example shown on figures 2 and 3, the first optical surface 12a is a convex surface and the second optical surface 12b is a concave surface.

The first optical surface 12a may be a back surface of the base substrate 10 located proximal to the eye of the user when the optical article is integrated in a pair of glasses, and the second optical surface 12b may be a front surface located distally from the eye of the user when the optical article is integrated in a pair of glasses. Alternatively, the second optical surface 12b may be the surface located proximal to the eye and the first optical surface 12a may be the front surface of the base lens substrate 10, located distally from the eye of the user.

The base substrate 10 may be formed in organic eyeglass, for example made of thermoplastic or thermosetting plastic. In particular, thermoplastic materials may be selected from, for instance: polyamides, polyimide, polysulfones, polycarbonates and copolymers thereof, polyethylene terephtalate) and polymethylmethacrylate (PMMA).

The base substrate 10 is preferably shaped to provide optical power suitable for correcting a wearer ametropia, for instance myopia or hyperopia. The base substrate 10 may be monofocal or multifocal such as a multifocal progressive lens.

The base substrate 10 may also be a semi-finished lens which means that it does not provide the final power, also called target power, of the lens that is to be manufactured from the semi-finished lens. It may provide a power which is not the target power, said target power being obtained by later surfacing of the semi-finished lens.

The base substrate 10 may also be a lens which is not trimmed, which means that its peripheral shape has not been adjusted to the shape of a frame in which it will then be inserted.

The method comprises a step 200 of determining a preferred path for a printing head 22 to print the pattern on each base substrate 10, taking into account each optical surface 12a, 12b of each base substrate 10.

One of the base substrates 10 is shown on figures 2 and 3 placed in a printing assembly 20 to print a pattern on at least one of the optical surfaces 12a, 12b.

The printing assembly 20 comprises at least one printing head 22 for depositing a dye on the surface being imprinted, and a support 24 to receive the base substrate 10.

During printing, a distance separating the printing head 22 form the optical surface 12a, 12b being printed on, varies over the path of the printing head 22, called a printing path.

When printing on the first optical surface 12a, as shown on figure 2, said distance varies between a first minimum distance d1, when printing on a center region of the first optical surface 12a, and a first maximum distance d2, when printing on an edge region of the first optical surface 12a.

When printing on the second optical surface 12b, as shown on figure 3, said distance varies between a second minimum distance d3, when printing on an edge of the second optical surface 12b, and a second maximum distance d4, when printing on an edge region of the second optical surface 12b.

The distance between the printing head 22 and each optical surface 12a, 12b being imprinted is an important parameter to control to obtain a precise and homogeneous printing result. For example, a distance comprised between 1 mm and 3 mm is considered more advantageous for printing.

Moreover, certain parts of the optical surface 12a, 12b may present a higher degree of importance than other, notably for the ophthalmic power of the finished lens.

Therefore, the step 200 comprises determining the preferred printing path, taking into account both optical surfaces 12a, 12b of both base substrates 10, the preferred path minimizing a parameter representative of a distance measured from the printing head 22 to the optical surface 12a, 12b being imprinted.

In a first embodiment, the parameter representative of the distance is a maximum of the distance over the region of the optical surface where the pattern is being printed.

In the example shown on figure 2 and 3, the step 200 may involve choosing between printing the pattern on the first optical surface 12a or on the second optical surface 12b, depending on the lower between the first maximum distance d2 and the second maximum distance d4.

In another embodiment, the parameter is an average of the distance measured from the printing head to the optical surface being imprinted over the printing path.

In the case of a homogeneous layer as the pattern, the average is calculated over the whole optical surface 12a, 12b.

Advantageously, the average is calculated by attributing different weights to different regions of the optical surfaces, depending on their importance relative to the intended use of the finished optical article.

As a first example shown on figure 4, in the case of the pattern being a homogeneous layer, a central region 30 of the optical surface 12a, 12b may be attributed a higher weight value in calculating the average, while an edge region 32 of the optical surface may be attributed a lower weight.

This distribution of weights first allows to focus on the most used part of an optical lens, which is the optical center and the central region 30 around it, and also consider the fact that at least a part of the edge region 32 may be trimmed further in the manufacturing process, making the printing quality in the edge region 32 less relevant.

The distribution of weights may also take into account localized optical features of the optical surface 12a, 12b, such as discontinuous or aspherical regions, and comprise a higher weight value attributed to regions extending around such optical features.

In the case of a progressive lens, the determined preferred printing path is advantageously determined by taking into account an amount of distortion the geometry of each optical surface would generate in the printed pattern.

In the case of a multifocal lens, the determined preferred printing path is advantageously determined by favoring the optical surface 12a, 12b presenting the least amount of surface disruption.

The method may comprise a step 300 of surface treatment, wherein at least one of the optical surfaces 12a, 12b of each substrate 10, upon which the pattern is destined to be printed according to the determined preferred prating path, is treated with a plasma 14 formed by a plasma torch 16, to improve the surface aspect.

The substrates 10 are then placed in a printing assembly 20 comprising at least one printing head 22 and a support 24.

The method may then comprise a step 400 of depositing a primer layer 26 by depositing a primer on at each part of the first optical surface 12a and/or the second otpical surface 12b where the determined preferred path extends.

The primer layer is deposited with the printing head 22 of the printing assembly 20, with a controlled flow rate, to achieve a homogeneous thickness.

Depositing a primer layer on the optical surface 12a of the substrate 10 allows the use of water-based dyes for inkjet printing on any kind of substrate, by replacing the specific type of surface of the substrate with a common primer surface that is compatible with the dye.

The primer layer allows to maintain the drops of dye in place and prevent transverse movement of the dye or coalescence of the drops.

The primer is selected to be compatible with inkjet printing, with appropriate values of viscosity and surface tension, and a high degree of stability inside the formulation and stability along time.

Furthermore, the primer is selected for compatibility with all the envisioned substrates, so as to not produce any type of chemical reaction with the substrate.

Viscosity and surface tension of the rimer are also low enough for the primer to spread enough to form a homogeneous layer on the desired part of the first optical surface 12a.

The primer is further selected for chemical compatibility with the different dyes, and to allow a transfer of the dyes through the primer layer. In order for the dye to transfer through the primer layer, the primer has a low adherence and a low degree of reticulation.

Finally, the primer is selected to be easily cleanable without using any aggressive chemical products, solvent or mechanical tool, and preferably through a water cleaning. Thus, the primer is preferably water-based or water-soluble.

The primer is preferably a water-based primer, notably an aqueous solution comprising a polymer. For example, the primer comprises an aqueous solution of polyvinyl alcohol. Advantageously, the method may comprise a step 500 of drying of the primer layer 26 using a near-infrared light source 28. The primer layer 26 is only partly dried to remove excessive moisture and improve the homogeneity of the primer layer.

The method then comprises a step 600 of printing the pattern on the optical surface 12a, 12b, with the at least one inkjet printing head 22 depositing at least one dye to form a dye layer 34. The dye is deposited following the determined printing path. The dye layer 34 may be continuous or comprise discontinuous portions, depending on the pattern and on the preferred printing path.

The dye layer 34 may extend over the primer layer 26 in the case where such a primer layer 26 was deposited beforehand.

The method may then comprise a step 700 of drying the deposited dye layer 34 using the near-infrared light source 28, similarly to the previously described drying step 500.

The method then comprises a step 800 of placing the base substrate 10 with the dye layer 34, and eventually the primer layer 26 underneath, in a heating assembly 40, for a predetermined duration at a predetermined temperature. The heating assembly is for example a dry oven, to fix the dye layer 34 in the optical surface 12a, 12b.

In the case where the primer layer 26 is present, during the duration, the dye layer 34 migrates through the primer layer 26 due to the heating and reaches the optical surface 12a, where it is held in place by the primer layer 26 and adheres to the optical surface 12a, forming at least part of the pattern.

The method may then comprise a step 900 of removing the primer layer 26, preferably through a water washing method such as with a low-pressure water jet, and obtaining the substrate 10 with at least part of the pattern printed on the optical surface 12a, 12b.

Notably, in the case where the determined preferred printing path extends only over a single optical surface 12a, 12b, the obtained substrate 10 constitutes the desired optical article, and presents the entire pattern on said optical surface 12a, 12b.

In an alternative embodiment, the preferred path extends over the first optical surface 12a and the second optical surface 12b.

For example, as shown on figures 2 to 4, the printing distance is lower when printing on the central region 30 of the first optical surface 12a, which is in this case the convex side, while the printing distance is shorter when printing in the edge region 32 of the second optical surface 12b, which is the concave side.

If both the central region 30 and the edge region 32 are of sufficient importance, for example if they both are attributed relatively high weights in an average distance calculation, the preferred printing path may be determined as extending on both optical surfaces 12a, 12b, in particular in the central region 30 of the first optical surface 12a and in the edge region 32 of the second optical surface 12b.

More generally, a first part of the pattern may be printed on the first optical surface 12a, through the steps of the method described above, then a second part of the pattern may be printed on the second optical surface 12b, by reiterating the steps 300 to 900 on the second optical surface 12b, to obtain the desired optical article.

Both parts of the pattern are advantageously complementary, meaning that, when the optical article is observed from a direction of an optical axis of the optical article, the whole pattern is visible to the observer.

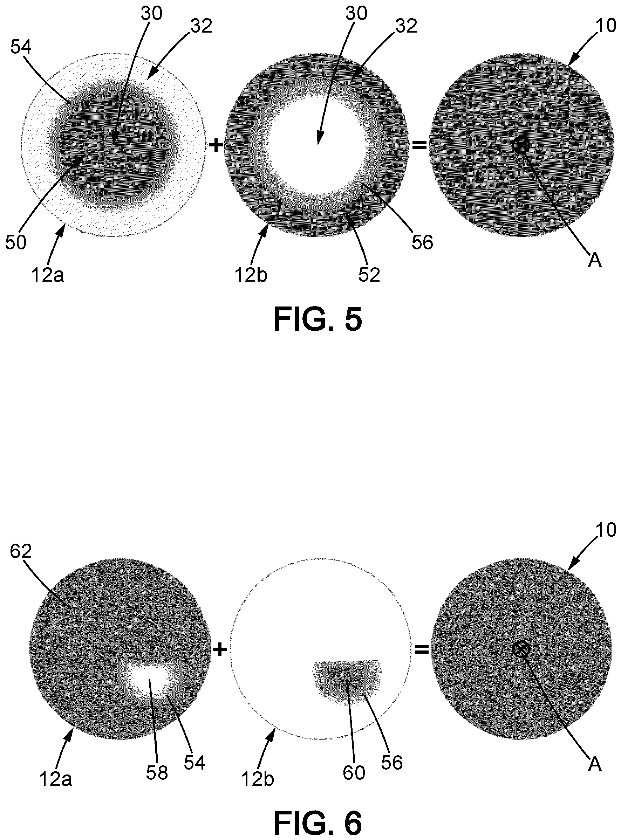

A first example is shown on figure 5, where a first part 50 of the pattern is printed in the central region 30 on the first optical surface 12a, and a second part 52 of the pattern is printed in the edge region 32 of the second optical surface 12b.

The two parts 50, 52 are complementary, the optical article 10 showing the whole pattern, here a homogeneous layer, when observed from the direction of the optical axis A.

Advantageously, the first part 50 of the pattern comprises a first gradient area 54 extending along a border of the first part 50, between the imprinted center region 30 and the non-imprinted edge region 32, and the second part 52 of the pattern comprises a second gradient area 56 extending along a border of the second part 52 between the non-imprinted center region 30 and the imprinted edge region 32.

In the first gradient area 54 and in the second gradient area 56, an optical transmission of the optical surface 12a, 12b varies continuously from the transmission of the printed part of the optical surface to the transmission of the non-imprinted part of the optical surface.

The first gradient area 54 and the second gradient area 56 have advantageously corresponding optical transmission variation, so that when the corresponding gradient area are observed from the direction of the optical axis A, the observed transmission is constant for the whole optical article.

Another example is shown on figure 6, where the substrate 10 comprises a flat first optical surface 12a presenting a discontinuous region 58, and a more concave or convex second optical surface 12b, that is sufficiently flat in a region 60 level with the discontinuous region 58 relative to the direction of the optical axis A.

In this case, the preferred printing path is determined so as to print a homogenous layer 62 on the first optical surface 12a, except in the discontinuous region 58, and to print on the corresponding region 60 of the second optical surface 12b.

Advantageously, the first and second gradient areas 54, 56 are present similarly to the previous example.

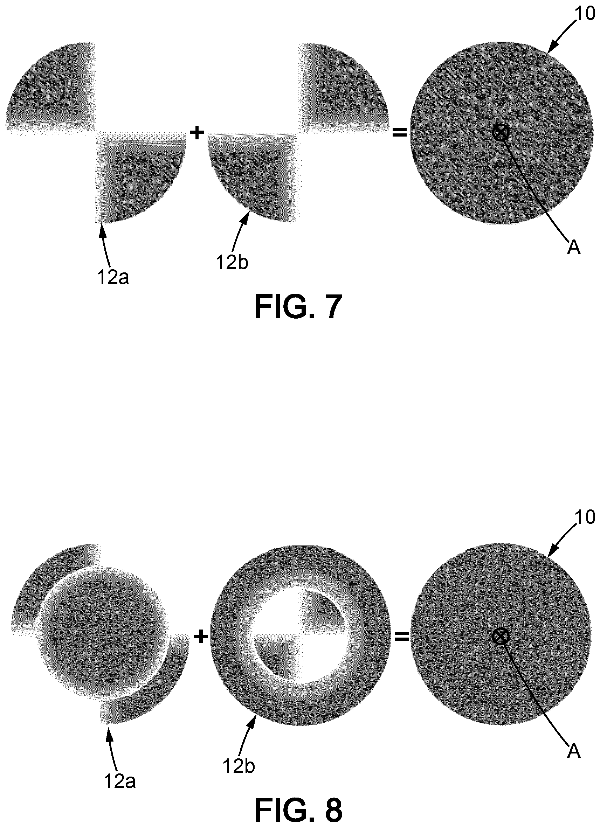

Another example is shown on figure 7, where the substrate 10 presents a high cylinder value. In this case, each optical surface 12a, 12b may present a profile comprising four quadrants, where each quadrant must be imprinted from one side to keep the printing distance satisfactory.

Finally, as shown on figure 8, the previous printing conditions may be present simultaneously, requiring the parts of the pattern printed on the first optical surface 12a and second optical surface 12b to comprise several corresponding imprinted and non-imprinted regions, to be printed on favorable conditions and to form a continuous layer when observed form the direction of the optical axis A.

## Claims

**1.** A method for manufacturing an optical article, the method comprising:
- providing (100) two base substrates (10), each base substrate (10) comprising two opposite optical surfaces (12a, 12b) and placing the base substrates (10) in a printing assembly (20),
- providing a pattern to be printed on each base substrate (10) through inkjet printing,
- determining (200) a preferred path for a printing head (22) to print the pattern on each base substrate (10), taking into account each optical surface (12a, 12b) of each base substrate (10), the preferred path minimizing a parameter representative of a distance measured from the printing head (22) to the optical surface (12a, 12b) being imprinted,
- printing (600) the pattern with at least one inkjet printing head (22) depositing at least one dye, the printing head (22) following the preferred path, and
- placing (800) each base substrate (10) in a heating assembly (40) for a predetermined duration.

**2.** The method according to claim 1, wherein the parameter representative of the distance is an average of the distance measured from the printing head (22) to the optical surface (12a, 12b) being imprinted over the preferred path.

**3.** The method according to claim 2, wherein the average is calculated with different weight values for different weighting regions (30, 32) of the optical surfaces (12a, 12b), at least one weighting region (30) closer to an optical center of the substrate (10) having a higher weight value than at least one weighting region (32) farther from the optical center.

**4.** The method according to claim 3, wherein the optical surface (12a, 12b) comprises at least one aspherical region and/or at least one discontinuous region (58), each aspherical region and each discontinuous region (58) having a higher weight value than at least one spherical region of the optical surface (12a, 12b).

**5.** The method according to claim 1, wherein the parameter representative of the distance is a maximum distance (d2, d4) measured from the printing head (22) to the optical surface (12a, 12b) being imprinted over the optical surface (12a, 12b).

**6.** The method according to any one of the previous claims, wherein the preferred path extends along at least two opposite optical surfaces (12a, 12b) of each base substrate (10).

**7.** The method according to claim 6, wherein, during the printing of the pattern, a first part (50) of the pattern is printed on one of the opposite optical surfaces (12a) and a second part (52) of the pattern is printed on another one of the opposite optical surfaces (12b).

**8.** The method according to claim 7, wherein the first part (50) of the pattern and the second part (52) of the pattern form a uniform layer when observed from a direction of an optical axis (A) of the base substrate (10).

**9.** The method according to claim 8, wherein the first part (50) of the pattern comprises at least one first gradient area (54) extending along a border of the first part (50) and the second part (52) of the pattern comprises at least one second gradient area (56) extending along a border of the second part (52), each first gradient area (54) being superposed with one of the second gradient areas (56) when observed from the direction of the optical axis (A), a sum of an optical transmission through the first part (50) of the pattern and through the second part (52) of pattern being constant.

**10.** The method according to any one of the previous claims, wherein at least one of the opposite optical surfaces (12a, 12b) comprises at least one curved region.

**11.** The method according to any one of the previous claims, wherein the method further comprises:
- depositing a primer layer (26) by depositing a primer on at least part of at least one of the optical surfaces (12a, 12b) of each base substrate (10),
- printing the pattern over the primer layer (26),
- migrating the dye through the primer layer (26) to the optical surface (12a, 12b) in the heating assembly (40), and
- removing the primer layer (26).

**12.** The method according to any one of the previous claims, wherein the pattern comprises a uniform layer extending over at least part of one of the opposite optical surfaces (12a, 12b).

**14.** The method according to any one of the previous claims, wherein the method further comprises a surface treatment step (300) during which the optical surface (12a, 12b) is treated with a plasma.

**15.** An optical article manufactured with a method according to any one of the previous claims.
